# EUROPEAN PATENT APPLICATION

(11) **EP 4 835 454 A1**
(43) Date of publication of application: **04.11.2026**
(21) Application number: 24911036.2
(22) Date of filing: 23.12.2024
(51) Int. Cl.: G01N 23/00

(54) **NEUTRON POISON MONITORING APPARATUS**

(30) Priority: 26.12.2023 CN 202311810626
(71) Applicant: Tsinghua University, Haidian District Beijing 100084 (CN); Nuctech Company Limited, TongFang Building Shuangqinglu Haidian District Beijing 100084 (CN)
(72) Inventor: ZONG, Chunguang, Beijing 100084 (CN); LI, Yuanjing, Beijing 100084 (CN); YANG, Yigang, Beijing 100084 (CN); MING, Shenjin, Beijing 100084 (CN); SONG, Quanwei, Beijing 100084 (CN); LIU, Bicheng, Beijing 100084 (CN); WANG, Dongyu, Beijing 100084 (CN)
(74) Representative: Gunzelmann, Rainer
(86) International application number: PCT/CN2024/141466
(87) International publication number: WO 2025/140108

(57) **Abstract**

Provided in the present disclosure is a neutron poison monitoring apparatus. The neutron poison monitoring apparatus comprises: a container, which is used for accommodating a liquid to be tested that contains a neutron poison; a neutron source, which is configured to emit neutrons to said liquid; a detector, which is configured to detect the number of neutrons and/or the number of photons in said liquid; a multi-channel scaler, which is configured to send to a neutron poison monitoring control apparatus the number of neutrons and/or the number of photons detected by the detector; the neutron poison monitoring control apparatus, which is configured to control the neutron source to emit the neutrons to said liquid, control the detector to detect the number of neutrons or the number of photons in said liquid within a time range after the neutron source is controlled to stop emitting neutrons to said liquid, so as to obtain a plurality of detection values, use a background value to correct each detection value among the plurality of detection values, so as to obtain a plurality of corrected values, and use the plurality of corrected values to determine the concentration of the neutron poison in said liquid; and a shielding device, which is configured to shield external interference received by said liquid and the detector.

## Description

### CROSS-REFERENCE TO RELATED APPLICATIONS

The present disclosure is based on and claims priority of Chinese application for invention No. 202311810626.4, filed on Dec. 26, 2023, the disclosure of hereby incorporated into this disclosure by reference in its entirety.

### TECHNICAL FIELD

This disclosure relates to the field of detection, particularly to a neutron poison monitoring apparatus.

### BACKGROUND

Traditional concentration measurement of neutron poisons particularly falls into two methods: the titration detection and the on-line instrumentation detection. The titration detection needs manual sampling, which poses a risk of radioactive contamination to the staff. Moreover, there is a certain time lag in the test results, which lack continuity, although the results are relatively accurate. The instrumentation detection employs online measurement, enabling continuous monitoring of boron concentration without any time lag in the results.

### SUMMARY

According to the first aspect of the present disclosure, there is provided a neutron poison monitoring apparatus, comprising: a container, configured to contain a liquid to be tested comprising neutron poisons; a neutron source, configured to emit neutrons into the liquid to be tested; a detector, configured to detect at least one of a neutron count or a photon count in the liquid to be tested; a multi-channel calibrator, configured to transmit at least one of the neutron count or the photon count detected by the detector to a neutron poison monitoring control device; the neutron poison monitoring control device, configured to control the neutron source to emit the neutrons into the liquid to be tested, control the detector to detect, during each of a plurality of specified time periods within a specified time range after controlling the neutron source to stop emitting the neutrons into the liquid to be tested, the neutron count or the photon count in the liquid to be tested to obtain a plurality of detection values, correct each of the plurality of detection values by using a background value to obtain a plurality of corrected values, and determine a neutron poison concentration in the liquid to be tested by using the plurality of corrected values; a shielding device, configured to shield the liquid to be tested and the detector from external interference.

In some embodiments, the neutron poison monitoring control device is configured to control the detector to detect at least one of the neutron count or the photon count in the liquid to be tested in a case where the liquid to be tested does not comprise the no neutrons emitted by the neutron source are present in the liquid to be tested, and to measure the background value by using a detection result.

In some embodiments, the neutron poison monitoring control device is configured to control the detector to repeatedly detect, during a background measurement cycle, at least one of the neutron count or the photon count in the liquid to be tested to obtain a plurality of background detection values, and calculate an average value of the plurality of background detection values to obtain the background value.

In some embodiments, the neutron poison monitoring control device is configured to delay for a specified duration after controlling the neutron source to emit a neutron pulse into the liquid to be tested, control the detector to repeatedly measure at least one of the neutron count or the photon count in the liquid to be tested after the specified duration and before controlling the neutron source to emit a next neutron pulse into the liquid to be tested to obtain a plurality of background detection values, and calculate an average value of the plurality of background detection values to obtain the background value.

In some embodiments, the specified duration is a predetermined multiple of a neutron lifetime.

In some embodiments, the predetermined multiple is not less than 10.

In some embodiments, the neutron poison monitoring control device is configured to calculate a logarithmic value of each of the plurality of corrected values to obtain a plurality of logarithmic values, perform linear fitting on the plurality of logarithmic values to obtain a slope of a fitting curve, and determine the neutron poison concentration based on the absolute value of the slope.

In some embodiments, the absolute value of the slope exhibits a linear relationship with the neutron poison concentration.

In some embodiments, among the plurality of specified time periods, a 0-th time period is a time period during which the neutron source stops emitting the neutrons into the liquid to be tested, or a time period corresponding to a specified delay after the neutron source stops emitting the neutrons into the liquid to be tested.

In some embodiments, the detector comprises at least one of a neutron detector or a gamma detector; or the detector is a detector configured to detect neutrons and gamma photons simultaneously.

In some embodiments, the detector is a counting-type detector or an energy-spectrum-type detector.

In some embodiments, the neutron source is a photoneutron source based on an electron linear accelerator or a pulsed neutron source based on a neutron tube.

Other features and advantages of the present invention will become apparent from the following detailed description of exemplary embodiments of the present disclosure with reference to the accompanying drawings.

### BRIEF DESCRIPTION OF THE DRAWINGS

In order to more clearly explain the embodiments of the present invention or the technical solutions in the prior art, a brief introduction will be given below for the drawings required to be used in the description of the embodiments or the prior art. It is obvious that, the drawings illustrated as follows are merely some embodiments of the present disclosure. For a person skilled in the art, he or she may also acquire other drawings according to such drawings on the premise that no inventive effort is involved.
Figure 1 is a schematic structural diagram of a neutron poison monitoring apparatus according to one embodiment of the present disclosure;
Figure 2 is a schematic diagram of a measurement cycle for measuring a background value according to one embodiment of the present disclosure;
Figure 3 is a schematic diagram of the variation of detection values over time according to one embodiment of the present disclosure;
Figure 4 is a schematic diagram of a calibration curve of neutron poison concentration according to one embodiment of the present disclosure;
Figure 5 is a schematic structural diagram of a neutron poison monitoring apparatus according to another embodiment of the present disclosure;
Figure 6 is a schematic structural diagram of a neutron poison monitoring apparatus according to still another embodiment of the present disclosure;
Figure 7 is a schematic structural diagram of a neutron poison monitoring apparatus according to still another embodiment of the present disclosure.

### DETAILED DESCRIPTION

Below, a clear and complete description will be given for the technical solution of embodiments of the present disclosure with reference to the figures of the embodiments. Obviously, merely some embodiments of the present disclosure, rather than all embodiments thereof, are given herein. The following description of at least one exemplary embodiment is in fact merely illustrative and is in no way intended as a limitation to the invention, its application or use. All other embodiments obtained by persons of ordinary skill in the art based on the embodiments of the present disclosure without creative efforts shall fall within the protection scope of the present disclosure.

Unless otherwise specified, the relative arrangement, numerical expressions and values of the components and steps set forth in these examples do not limit the scope of the invention.

At the same time, it should be understood that, for ease of description, the dimensions of the various parts shown in the drawings are not drawn to actual proportions.

Techniques, methods, and apparatus known to those of ordinary skill in the relevant art may not be discussed in detail, but where appropriate, these techniques, methods, and apparatuses should be considered as part of the specification.

Of all the examples shown and discussed herein, any specific value should be construed as merely illustrative and not as a limitation. Thus, other examples of exemplary embodiments may have different values.

Notice that, similar reference numerals and letters are denoted by the like in the accompanying drawings, and therefore, once an item is defined in a drawing, there is no need for further discussion in the accompanying drawings.

The inventors found that in traditional neutron poison concentration detection techniques, it is assumed by default that the influence of the background on detection results is stable, or even negligible. This leads to a deterioration in measurement accuracy when the influence of the background changes. For example, in the field of spent fuel processing, since the background cannot be ignored and the background count varies over time during monitoring the concentration of neutron poisons, existing solutions cannot obtain accurate monitoring results.

Accordingly, this disclosure provides a neutron poison monitoring apparatus that can obtain accurate monitoring results by correcting detection values obtained by a detector using background data.

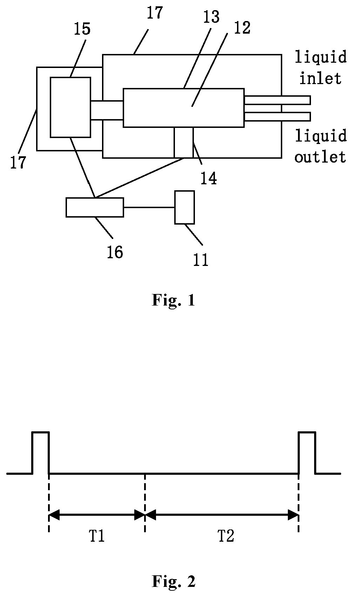

Figure 1 is a schematic structural diagram of a neutron poison monitoring apparatus according to one embodiment of the present disclosure. As shown in Figure 1, a neutron poison monitoring apparatus comprises a neutron poison monitoring control device 11, a container 13 for containing a liquid 12 to be tested, a neutron source 14, a detector 15, a multi-channel calibrator 16, and a shielding device 17. The liquid 12 to be tested comprises neutron poisons.

The neutron source 14 is configured to emit neutrons into the liquid 12 to be tested.

In some embodiments, the neutron source 14 is a photoneutron source based on an electron linear accelerator, or a pulsed neutron source based on a neutron tube, or a pulsed neutron source of other forms.

For example, the neutron pulses generated by the pulsed neutron source have a width ranging from 0.5 to 4µs, and a pulse frequency within the range of 100 to 1000 Hz.

For example, the neutron poisons comprises boron, cadmium, samarium, or other well-known neutron poison elements.

It should be noted that due to the need to detect the time spectrum of the neutrons or the gamma particles in the present disclosure, the neutron source is needed to intermittently emit the neutrons. In this case, isotope neutron sources that continuously emit neutrons cannot be used.

The detector 15 is configured to detect a neutron count or photon count in the liquid 12 to be tested.

In some embodiments, the detector 15 comprises at least one of a neutron detector or a gamma detector. Alternatively, the detector 15 is a detector configured to detect the neutrons and the gamma photons simultaneously.

In some embodiments, the detector 15 is a counting-type detector or an energy-spectrum-type detector.

The multi-channel calibrator 16 is configured to transmit the neutron count or photon count detected by the detector 15 to the neutron poison monitoring control device 11.

The shielding device 17 is configured to shield the liquid 12 to be tested and the detector 15 from external interference.

For example, the shielding device 17 comprises a neutron shielding device and a photon shielding device.

The neutron poison monitoring control device 11 is configured to control the neutron source 14 to emit the neutrons into the liquid 12 to be tested, control the detector 15 to detect, during each of a plurality of specified time periods within a specified time range after controlling the neutron source 14 to stop emitting the neutrons into the liquid 12 to be tested, the neutron count or the photon count in the liquid 12 to be tested to obtain a plurality of detection values (i.e., a time spectrum), correct each of the plurality of detection values by using a background value to obtain a plurality of corrected values, and determine a neutron poison concentration in the liquid 12 to be tested by using the plurality of corrected values.

It should be noted that the concentration of the neutron poisons can be determined by analyzing the time-dependent variation of the neutron counts obtained by using the neutron detector, or alternatively by analyzing the time-dependent variation of gamma photon counts measured with the photon detector. According to the neutron nuclear reaction theory, the number of the gamma photons generated from the reactions between the neutrons and a material is proportional to the neutron flux, that is, the count of the gamma photons is proportional to the count of neutrons. Therefore, performing analysis by using the count of the gamma photon can also provide the neutron poison concentration value.

In some embodiments, among the plurality of specified time periods, a 0-th time period is a time period during which the neutron source stops emitting the neutrons into the liquid to be tested, or a time period corresponding to a specified delay after the neutron source stops emitting the neutrons into the liquid to be tested. ***N*₀** denotes at least one of the neutron count or the photon count detected during the 0-th time period, while ***N*(*t*)** represents at least one of the neutron count or the photon count detected during t-th time period, wherein **1 ≤ t ≤ T,** and **T** is the latest time period. For example, in a case where the pulsed neutron source is used, **T** can represent a certain time period before the next neutron pulse is to be emitted, or it can denote a specific moment before the next neutron pulse is to be emitted.

It should be noted that, within a certain period after the neutron source is controlled to stop emitting the neutrons into the liquid to be tested, for instance during a period following the end of a pulse, the variation in the neutron and the gamma photon counts over time follows the law of negative exponential decay. The fast neutrons generated by the neutron source mainly undergo two processes when they enter and are absorbed by the liquid to be tested.

1) The process of energy loss through inelastic scattering or elastic scattering: The fast neutrons (e.g., in the MeV energy range) produced by the neutron source, upon entering the liquid to be tested, will undergo inelastic or elastic scattering with the nuclides within the liquid to be tested, rapidly losing energy and thereby transitioning from the fast neutron region into the slow neutron region.

2) The process of neutron diffusion and absorption: After the neutrons entering the slow neutron region, the motion of the neutrons within the medium can be regarded as a diffusion process. At the end of the neutron diffusion process, the neutrons are absorbed by various nuclides in the liquid. The neutron absorption cross-section ***σ*** is inversely proportional to the neutron velocity v, which is why this region is known as the 1/v region.

In the 1/v region, the probability of the neutrons being absorbed within any given time interval remains constant, allowing the survival probability of the neutrons during this process to be described by the exponential decay law:
$N \left(t\right) = {N}_{0} ⋅ {e}^{- \frac{t}{τ}}$ (1)

In formula (1), *N*₀ is the number of the neutrons in the liquid during the 0-th time period, *N*(*t*) is the number of the neutrons during time period t, and ***τ*** is the lifetime of the neutrons in the liquid.

Since the duration of Process 1) is extremely short, spanning only from nanoseconds (ns) to tens of nanoseconds, whereas the duration of Process 2) often reaches the order of 10 microseconds, relative to the entire process, the time occupied by Process 1) is negligible, and the neutron lifetime in the liquid to be tested, namely its survival time, is primarily determined by Process 2). In Process 2), the neutron lifetime τ is determined by the following formula:
$\overline{\left({t}_{c}-{t}_{0}\right)} = τ = \frac{1}{{\sum }_{i = 1}^{n} {n}_{i} ⋅ {σ}_{0 , i} ⋅ {v}_{0}}$ (2)

In formula (2), ***t*₀** represents the time when the neutrons enter the liquid to be tested, ***t_{c}*** represents the time when the neutrons are absorbed, and **(̅*̅t̅_̅{̅c̅}̅*̅ -̅ *̅t̅*̅₀̅)̅** represents the experimentally measured average of the time difference between these two moments, which equals the neutron lifetime ***τ*.** n represents the number of nuclide types in the liquid, ***nᵢ*** denotes the number density (**1/*cm*³**) of nuclide i, ***σ*_{0,*i*}** represents the neutron absorption cross-section of this nuclide at an energy of 25.3 meV, and ***v*₀** is the velocity of neutrons with an energy of 25.3 meV, which is **2.2 × 10%⁵*cm*/*s*.** Due to the enormous absorption cross-sections of the neutron poison elements, their contribution to the denominator on the right-hand side of Equation (2) is significant. Consequently, variations in the concentration of neutron poison elements within the liquid will markedly affect the value of ***τ*,** enabling the measurement of neutron poison element concentrations through analysis of ***τ*.**

Taking the reciprocal of both sides of Equation (8) yields:
$\frac{1}{τ} = {\sum }_{i = 1}^{n} {n}_{i} ⋅ {σ}_{0 , i} ⋅ {v}_{0} = {v}_{0} ⋅ {Σ}_{0 , a}$ (3)

By employing an analysis similar to that described above, it can be considered that ***Σ*_{0,*a*}** (the macroscopic absorption cross-section of the thermal neutrons) originates from both neutron poisons and other elements. Since the macroscopic absorption cross-section of the thermal neutrons of the other elements remains nearly constant, the value of $\frac{1}{τ}$ is linearly correlated with the concentration of neutron poisons.

Taking the logarithm of both sides of Equation (1) yields:
$ln \left[N\left(t\right)\right] = ln \left({N}_{0}\right) - \frac{t}{τ}$ (4)

From Equation (4), it can be seen that on a semi-logarithmic plot, the neutron count exhibits a linear relationship with time, and the absolute value of the linear slope is the reciprocal of the neutron lifetime ( $\frac{1}{τ}$). Therefore, by measuring the curve of the neutron count variation over time (the time-spectrum curve), taking its logarithm, and then performing linear fitting to determine the slope, the absolute value of this slope exhibits a linear relationship with the concentration of neutron poisons.

Considering that the neutron poison monitoring apparatus may operate in environments with significant background influence and slowly varying background levels, such that the apparatus must account for the impact of the background count ***N_{bkg}*** on measurements. This involves measuring the background value and subtracting the background value from the detection value obtained by the detector.

In some embodiments, the neutron poison monitoring control device is configured to control the detector to detect at least one of the neutron count or the photon count in the liquid to be tested in a case where the liquid to be tested does not comprise the no neutrons emitted by the neutron source are present in the liquid to be tested, and to measure the background value by using a detection result. For example, the background value can be measured using the following Embodiment 1 and Embodiment 2.

### Embodiment 1

During a background measurement cycle, the neutron poison monitoring control device controls the detector to detect the neutron count in the liquid to be tested multiple times, so as to obtain a plurality of background detection values. It should be noted that during the background measurement cycle, the liquid to be tested does not comprise the neutrons emitted by the neutron source. Next, the average of the plurality of background detection values is calculated to obtain the background value.
For example, a measurement cycle is divided into a background measurement cycle and a beam-on measurement cycle. The background value is measured during the background measurement cycle. During the beam-on measurement cycle, the neutron source is controlled to emit the neutrons into the liquid to be tested. During each of a plurality of specified time periods within a specified time range after controlling the neutron source to stop emitting the neutrons into the liquid to be tested, the neutron source is controlled to detect the neutron count or the photon count in the liquid to be tested to obtain a plurality of detection values. Subsequently, each detection value is corrected by using the obtained background value, resulting in a plurality of corrected values.

### Embodiment 2

As shown in Figure 2, after controlling the neutron source to emit the neutron pulses into the liquid to be tested, the neutron poison monitoring control device delay for a specified duration T1. The specified duration T1 is a predetermined multiple of the neutron lifetime, which is not less than 10.

For example, in a case where the neutron lifetime does not exceed ***τ*₀,** the specified duration T1 is 10***τ*₀**. By delaying for the specified duration, it can be ensured that the liquid to be tested does not contain the neutrons emitted from the neutron source.

After the specified duration T1 and before the neutron poison monitoring control device controls the neutron source to emit the next neutron pulse into the liquid to be tested, as in the duration T2 shown in FIG. 2, the neutron poison monitoring control device controls the detector to repeatedly detect the neutron count in the liquid to be tested, thereby obtaining a plurality of background detection values. The background value is obtained by calculating the average of the plurality of background detection values.

It should be noted that, since the background counts resulting from background radioactivity exhibit a white noise spectrum in terms of temporal distribution, the background count can be represented by the average value calculated across time channels (wherein a channels in MCS (multichannel scaling) represent individual time intervals).

In some embodiments, the neutron poison monitoring control device is configured to calculate the logarithmic value of each of the plurality of corrected values, thereby obtaining a plurality of logarithmic values. For example, the above logarithmic values are natural logarithmic values. Next, linear fitting is performed on the plurality of logarithmic values to obtain the slope of the fitted curve, and then the concentration of neutron poisons is determined based on the absolute value of the slope.

It should be noted that since the absolute value of the slope exhibits a linear relationship with the concentration of neutron poisons, the concentration of neutron poisons can be determined based on the absolute value of the slope.

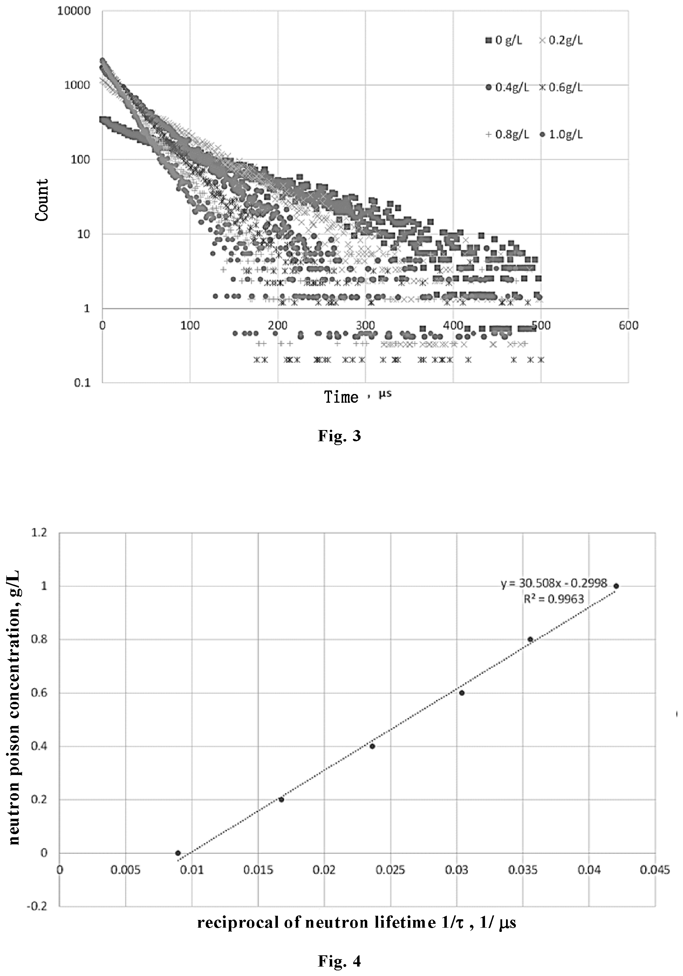

For example, for different concentrations of neutron poisons, each detected value is first corrected by using the obtained background value to yield a plurality of corrected values. Next, according to formula (4), the natural logarithm of each corrected value among the plurality of corrected values is calculated. In this case, the schematic diagram of the variation of detection values over time is shown in Figure 3. Next, linear fitting is performed on the plurality of natural logarithmic values to obtain the slope of the fitted curve, and then the concentration of neutron poisons is determined based on the absolute value of the slope, as illustrated in Figure 4.

As can be seen from Figure 4, by employing the aforementioned embodiments of the present disclosure, the concentration of neutron poisons can be accurately measured.

In addition, it should also be noted that since the quantity measured in the time-spectrum statistics is $\frac{Δ N}{Δ t}$, and $\frac{Δ N}{Δ t} \approx \frac{d N}{d t}$ , the statistical quantity is essentially a differential signal. This differential characteristic reduces the requirement for the stability of the neutron source, and the actual monitoring apparatus can also avoid detecting the intensity fluctuations of the neutron source.

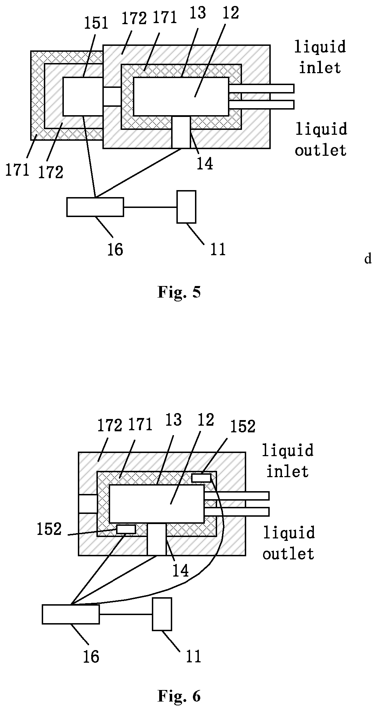

Figure 5 is a schematic structural diagram of a neutron poison monitoring apparatus according to another embodiment of the present disclosure. The difference between Figure 5 and Figure 1 is that in the embodiment shown in Figure 5, the detector 15 only comprises a photon detector 151, while the shielding device 17 comprises a neutron shielding device 171 and a photon shielding device 172.

Figure 6 is a schematic structural diagram of a neutron poison monitoring apparatus according to still another embodiment of the present disclosure. The difference between Figure 6 and Figure 5 is that in the embodiment shown in Figure 6, the detector 15 only comprises a neutron detector 152.

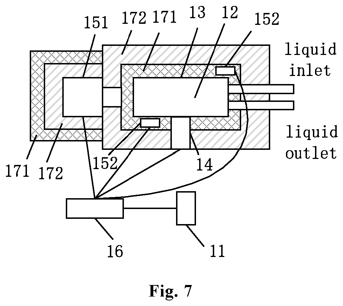

Figure 7 is a schematic structural diagram of a neutron poison monitoring apparatus according to still another embodiment of the present disclosure. The difference between Figure 7 and Figure 6 is that in the embodiment shown in Figure 7, the detector 15 comprises a photon detector 151 and a neutron detector 152.

By implementing the aforementioned embodiments of the present disclosure, accurate online measurement of the neutron poison concentration can be achieved in environments with high background levels, thereby providing an effective measurement solution for online monitoring of the neutron poison concentration in nuclear installations.

The apparatus provided in this disclosure effectively addresses the need for measuring neutron poison concentrations in nuclear installations, which holds significant importance for ensuring the criticality safety of such installations.

In some embodiments, the above functional modules can be implemented as a general-purpose processor for performing the functions described in this disclosure, Programmable logic controller (PLC), digital signal processor (DSP), application specific integrated circuit (ASIC), field programmable gate array (FPGA) or other programmable logic devices, discrete gates or transistor logic devices, discrete hardware components or any appropriate combination thereof.

A person skilled in the art can understand that all or part of the steps for carrying out the method in the above embodiments can be completed by hardware or a program instructing the related hardware, wherein the program can be stored in a computer readable storage medium. The storage medium may be a read-only memory (ROM), a magnetic disk or a compact disk (CD).

The above description of this invention is given for illustration and description, but is not exhaustive and is not intended to limit the present invention to the form disclosed herein. Various modifications and variations are apparent for a person of ordinary skill in the art. Embodiments are selected and described for a better illustration of the principle and practical application of this invention, so that those skilled in the art can understand this invention and envisage various embodiments with various modifications suited to specific usages.

## Claims

1. A neutron poison monitoring apparatus, comprising:
a container, configured to contain a liquid to be tested comprising neutron poisons;
a neutron source, configured to emit neutrons into the liquid to be tested;
a detector, configured to detect at least one of a neutron count or a photon count in the liquid to be tested;
a multi-channel calibrator, configured to transmit at least one of the neutron count or the photon count detected by the detector to a neutron poison monitoring control device;
the neutron poison monitoring control device, configured to control the neutron source to emit the neutrons into the liquid to be tested; control the detector to detect, during each of a plurality of specified time periods within a specified time range, the neutron count or the photon count in the liquid to be tested to obtain a plurality of detection values, the specified time range being after controlling the neutron source to stop emitting the neutrons into the liquid to be tested; correct each of the plurality of detection values by using a background value to obtain a plurality of corrected values; and determine a neutron poison concentration in the liquid to be tested by using the plurality of corrected values;
a shielding device, configured to shield the liquid to be tested and the detector from external interference.

2. The neutron poison monitoring apparatus according to claim 1, wherein
the neutron poison monitoring control device is configured to control the detector to detect at least one of the neutron count or the photon count in the liquid to be tested in a case where no neutrons emitted by the neutron source are present in the liquid to be tested , and to measure the background value by using a detection result.

3. The neutron poison monitoring apparatus according to claim 2, wherein
the neutron poison monitoring control device is configured to control the detector to repeatedly detect, during a background measurement cycle, at least one of the neutron count or the photon count in the liquid to be tested to obtain a plurality of background detection values, and calculate an average value of the plurality of background detection values to obtain the background value.

4. The neutron poison monitoring apparatus according to claim 2, wherein
the neutron poison monitoring control device is configured to delay for a specified duration after controlling the neutron source to emit a neutron pulse into the liquid to be tested; control, after the specified duration and before controlling the neutron source to emit a next neutron pulse into the liquid to be tested , the detector to repeatedly measure at least one of the neutron count or the photon count in the liquid to be tested to obtain a plurality of background detection values; and calculate an average value of the plurality of background detection values to obtain the background value.

5. The neutron poison monitoring apparatus according to claim 4, wherein
the specified duration is a predetermined multiple of a neutron lifetime.

6. The neutron poison monitoring apparatus according to claim 5, wherein
the predetermined multiple is not less than 10.

7. The neutron poison monitoring apparatus according to claim 1, wherein
the neutron poison monitoring control device is configured to calculate a logarithmic value of each of the plurality of corrected values to obtain a plurality of logarithmic values; perform linear fitting on the plurality of logarithmic values to obtain a slope of a fitting curve; and determine the neutron poison concentration based on the absolute value of the slope.

8. The neutron poison monitoring apparatus according to claim 7, wherein
the absolute value of the slope exhibits a linear relationship with the neutron poison concentration.

9. The neutron poison monitoring apparatus according to claim 1, wherein
among the plurality of specified time periods, a 0-th time period is a time period during which the neutron source stops emitting the neutrons into the liquid to be tested, or a time period corresponding to a specified delay after the neutron source stops emitting the neutrons into the liquid to be tested.

10. The neutron poison monitoring apparatus according to any one of claims 1 to 9, wherein:
the detector comprises at least one of a neutron detector or a gamma detector; or
the detector is a detector configured to detect neutrons and gamma photons simultaneously.

11. The neutron poison monitoring apparatus according to claim 10, wherein
the detector is a counting-type detector or an energy-spectrum-type detector.

12. The neutron poison monitoring apparatus according to any one of claims 1 to 9, wherein
the neutron source is a photoneutron source based on an electron linear accelerator or a pulsed neutron source based on a neutron tube.
